## Europäisches Patentamt
## European Patent Office
## Office européen des brevets

(19)

(11) Veröffentlichungsnummer: **0 129 035**
**B1**

(12) # EUROPÄISCHE PATENTSCHRIFT

(45) Veröffentlichungstag der Patentschrift:
**24.09.86**

(51) Int. Cl.⁴: **H 01 H 83/10**, H 02 H 7/18

(21) Anmeldenummer: **84105104.8**

(22) Anmeldetag: **05.05.84**

(54) **Varistorsicherungselement.**

(30) Priorität: **21.05.83 DE 3318588**

(43) Veröffentlichungstag der Anmeldung:
**27.12.84 Patentblatt 84/52**

(45) Bekanntmachung des Hinweises auf die Patenterteilung:
**24.09.86 Patentblatt 86/39**

(84) Benannte Vertragsstaaten:
**AT BE FR GB IT NL**

(56) Entgegenhaltungen:
**CH-A-515 604**
**DE-A-2 738 544**
**US-A-893 780**
**US-A-3 213 345**

(73) Patentinhaber: **BROWN, BOVERI & CIE
Aktiengesellschaft, Kallstadter Strasse 1, D-6800
Mannheim 31 (DE)**

(72) Erfinder: **Ziegenbein, Botho, Dr.,
Eichendorffstrasse 4, D-6901 Neckarsteinach (DE)**

(74) Vertreter: **Kempe, Wolfgang, Dr., c/o Brown,
Boveri & Cie AG Postfach 351, D-6800 Mannheim
1 (DE)**

EP 0 129 035 B1

**Beschreibung**

Die Erfindung Bezieht sich auf ein Sicherungselement mit zwei Zuleitungen zum parallelen Anschluß an eine Batteriezelle, mit einem zwischen den beiden Zuleitungen liegenden Halbleiter und einer durch die Joulsche Verlustwärme des Halbleiters auslösbaren thermischen Sicherung, wobei durch das Auslösen der thermischen Sicherung zwei den Halbleiter überbrückende, mit den Zuleitungen verbundene Schaltkontakte irreversibel schließbar sind. Die Erfindung bezieht sich desweiteren auf ein Sicherungselement mit zwei Zuleitungen zum parallelen Anschluß an eine Batteriezelle, mit einem zwischen den beiden Zuleitungen liegenden Halbleiter, wobei eine der Zuleitungen federnd ausgebildet und über eine als thermische Sicherung dienende elektrisch leitfähige Schmelzlegierung mit dem Halbleiter verbunden ist und wobei durch das Auslösen der thermischen Sicherung zwei den Halbleiter überbrückende, mit den Zuleitungen verbundene Schaltkontakte irreversibel schließbar sind.

Ein solches Sicherungselement ist aus der US-PS 32 13 345 bekannt. Das bekannte Sicherungselement enthält eine Halbleiterdiode mit angelötetem L-förmigen Draht und dient zur Überbrückung einzelner Zellen einer Batterie-Serienschaltung. Bei korrekter Polarität der Batteriezelle wird die Halbleiterdiode mit Sperrspannung beaufschlagt, d.h. es ergibt sich kein Stromfluß über das Sicherungselement. Bei einem Polaritätswechsel infolge defekter Zelle ergibt sich ein hoher Strom durch die Diode, wodurch die Lötverbindung zwischen Draht und Diode geschmolzen wird. Hierdurch wird die Batteriezelle irreversibel elektrisch überbrückt.

Bei aus Natrium/Schwefel-Zellen bestehenden Hochtemperatur-Batterien ist ein Ausfall einer einzelnen Zelle nicht nur durch einen Polaritätswechsel an der Zelle, sondern auch durch die Hochohmigkeit der ausgefallenen Zelle eindeutig erkennbar.

Der Erfindung liegt davon ausgehend die Aufgabe zugrunde, ein Sicherungselement zu schaffen, das defekte, hochohmige Batteriezellen zuverlässig und dauerhaft überbrückt.

Diese Aufgabe wird gemäß einer ersten Variante erfindungsgemäß dadurch gelöst, daß ein Varistor als Halbleiter eingesetzt ist und daß der Varistor mit beiden Zuleitungen direkt verbunden ist, wobei ein Isolator zwischen ein verlängertes Ende der ersten U-förmigen Zuleitung und einer wannenförmigen Ausnehmung der zweiten Zuleitung eingeschoben ist und beide Zuleitungen mit einander gegenüberliegenden Schaltkontakten ausgerüstet sind.

Die Lösung der Aufgabe erfolgt gemäß einer zweiten Variante erfindungsgemäß dadurch, daß ein Varistor als Halbleiter eingesetzt ist und daß der Varistor direkt mit einer U-förmigen Zuleitung verbunden ist, wobei beide Zuleitungen mit einander gegenüberliegenden Schaltkontakten ausgerüstet sind. In diesem Zusammenhang ist es bereits aus der GB-A-893 780 bekannt, Varistoren als Überstrom-Überspannungs- bzw. Übertemperaturschutz einzusetzen. Dabei ist ein Varistor mit einer unter einer Federspannung stehenden Zuleitung verlötet, wobei das Lot als thermische Sicherung dient. Im bekannten Fall erfolgt jedoch eine dauerhafte Auftrennung des zu schützenden elektrischen Schaltkreises nach Auslösung der Sicherung.

Die mit der Erfindung erzielbaren Vorteile bestehen insbesondere darin, daß das Varistor-Sicherungselement sehr einfach aufgebaut und dementsprechend sehr preiswert herstellbar ist. Je nach verwendetem thermischem Sicherungsmaterial ist es auch bei hohen Temperaturen, z.B. bei 400° C, noch zuverlässig einsetzbar.

Zum Schutz der Batteriezellen wird dabei die nichtlineare spannungsabhängige Widerstandsänderung von Varistoren benutzt, wobei die Tatsache ausgenutzt wird, daß sich durch den steigenden Innenwiderstand einer ausfallenden Natrium/Schwefel-Zelle eine Überspannung an den Anschlußklemmen dieser Zeilen ergibt. Der Widerstandswert von Varistoren sinkt mit steigender anliegender Spannung. Der Effekt beruht nicht auf ein er Erwärmung mit negativem Temperaturkoeffizienten, sondern auf einer mit wachsender Spannung zunehmenden Zahl von freien Ladungsträgern im Varistor.

Eine vorteilhafte Ausgestaltung der Erfindung ist im Unteranspruch 2 gekennzeichnet.

Die Erfindung wird nachstehend anhand der in den Zeichnungen dargestellten Ausführungsformen erläutert.

Es zeigen:

Fig. 1 und 2 zwei verschiedene Ausführungsformen von thermischen Varistor-Sicherungselementen,

Fig. 3 den Einsatz von Varistor-Sicherungselementen bei einer Hochtemperatur-Batterie.

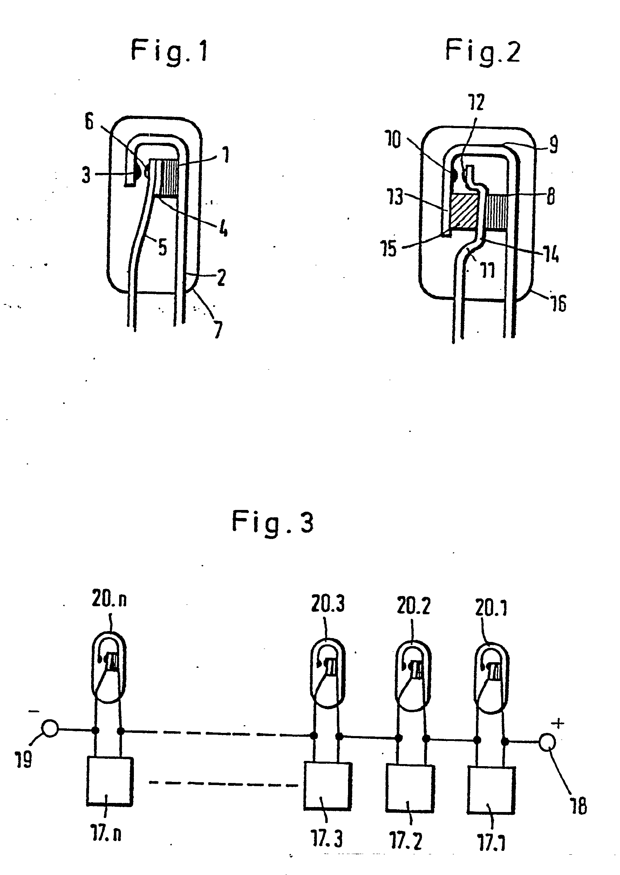

In Fig. 1 ist eine erste Ausführungsform eines thermischen Varistorsicherungselementes dargestellt. Ein Varistor 1 ist mit einer ersten zum elektrischen Anschluß dienenden Zuleitung 2 verbunden. Die Zuleitung 2 ist U-förmig ausgebildet und besitzt an ihrem offenen Ende einen ersten Schaltkontakt 3. Der gegenüber diesem Schaltkontakt 3 an der Zuleitung 2 angebrachte Varistor 1 ist über eine als Lotmaterial dienende Schmelzlegierung 4 mit einer zweiten zum elektrischen Anschluß dienenden Zuleitung 5 verbunden.

Als Schmelzlegierungen 4 können z.B. eine Aluminium-Silizium-Zinn-Legierung oder andere allgemein bekannte Aluminiumlote eingesetzt werden. Der Schmelzpunkt derartiger Legierungen liegt vorzugsweise bei 400° bis 500° C.

Die zweite Zuleitung 5 ist als Feder ausgeführt und weist einen zweiten Schaltkontakt 6 an ihrem offenen Ende auf. Eine Kapselung 7 umschließt das Varistorsicherungselement.

Der zweite Schaltkontakt 6 ist genau gegenüber dem ersten Schaltkontakt 3 angeordnet. Bei unzerstörter Schmelzlegierung 4 sind die Schaltkontakte 3 und 6 geöffnet und die federnde zweite Zuleitung 5 ist über die Schmelzlegierung 4 und den Varistor 1 fest mit der ersten Zuleitung 2 verbunden.

Im normalen Betriebsfall ergibt sich nach Anschluß der beiden Zuleitungen 2 und 5 ein Stromfluß von der ersten Zuleitung 2 über den Varistor 1 und die Schmelzlegierung 4 zur zweiten Zuleitung 5 bzw. umgekehrt. Unter einem "normalen Betriebsfall" wird dabei insbesondere verstanden, daß die zwischen den beiden Zuleitungen 2, 5 anliegende Betriebsspannung einen vorgebbaren zulässigen Grenzwert nicht übersteigt.

Bei Auftreten von Überspannungen (Betribsspannung zwischen Zuleitungen 2,5 übersteigt einen zulässigen Grenzwert) jedoch steigt der Durchlaßstrom des Varistors entsprechend der I/U-Varistorkennlinie steil an (zur Varistorkennlinie siehe z.B. Höft, Passive elektronische Bauelemente, Hüthig-Verlag, Heidelberg, 1967, Seite 89). Die dadurch ebenfalls stark zunehmenge Verlustleistung im Varistor 1 heizt diesen auf. Diese Temperaturerhöhung wird benutzt, um die als sekundäre, irreversible thermische Sicherung dienende Schmelzlegierung 4 aufzulösen, d.h. zu schmelzen. Hierdurch löst sich die als Feder ausgebildete zweite Zuleitung 5 vom Varistor 1 ab und die Schaltkontakte 3,6 werden folglich geschlossen.

Nach ausgelöster thermischer Sicherung ergibt sich ein Stromfluß von der ersten Zuleitung 2 über die Schaltkontakte 3,6 zur zweiten Zuleitung 5 bzw. umgekehrt.

In Fig. 2 ist eine zweite Ausführungsform eines thermischen Varistorsicherungselements dargestellt. Ein Varistor 8 ist dabei wiederum mit einer ersten U-förmig gebogenen Zuleitung 9 verbunden. Die Zuleitung 9 weist einen ersten Schaltkontakt 10 auf. Desweiteren ist wiederum eine zweite Zuleitune 11 mit einem zweiten Schaltkontakt 12 an ihrem offenen Ende vorgesehen.

Die U-förmige erste Zuleitung 9 besitzt ein im Vergleich zur Ausführungsform gemäß Fig. 1 über den ersten Schaltkontakt 10 hinaus verlängertes offenes Ende 13. Im Bereich dieses verlängerten Endes 13 der ersten Zuleitung 9 weist die gegenüberliegende zweite Zuleitung 11 eine wannenförmige Ausnehmung 14 auf. Zwischen dem verlängerten Ende 13 und der wannenförmigen Ausnehmung 14 ist ein Isolator 15 eingeschoben bzw. angebracht. Der Isolator 15 besteht z.B. aus einem elastischen Verbund von Glasfasern. Durch das Einlegen des Isolators 15 wird das verlängerte Ende 13 der als Feder ausgebildeten ersten Zuleitung 9 zurückgeschoben, so daß die beiden sich gegenüberliegenden Schaltkontakte 10 und 12 geöffnet werden. Das Varistorsicherungselement ist von einer Kapselung 16 umschlossen.

Im normalen Betriebsfall ergibt sich nach Anschluß der beiden Zuleitungen 9, 11 ein Stromfluß von der ersten Zuleitung 9 über den Varistor 8 zur zweiten Zuleitung 11 bzw. umgekehrt. Bei Auftreten einer Überspannung steigt der Durchlaßstrom entsprechend der I/U-Kennlinie des Varistors 8 steil an, was zur Folge hat, daß der Varistor 8 den Isolator 15 über eine festgelegte Entspannungstemperatur des Isolationsmaterials aufheizt. Nach Überschreiten der Entspannungstemperatur des Isolationsmaterials verliert der Isolator 15 seine Elastizität und die federnd ausgeführte Zuleitung 9 drückt den Isolator 15 über ihr verlängertes Ende 13 zusammen. Folglich schließen sich die beiden Schaltkontakte 10 und 12 und es ergibt sich nach ausgelöster thermischer Sicherung ein Stromfluß von der ersten Zuleitung 9 über die beiden Schaltkontakte 10 und 12 zur zweiten Zuleitung 11 bzw. umgekehrt.

In Fig. 3 ist eine Einsatzmöglichkeit der unter Fig. 1 und 2 beschriebenen thermischen Varistorsicherungselemente bei einer Hochtemperatur-Batterie dargestellt. Die Hochtemperatur-Batterie weist eine Vielzahl in Serie geschalteter Natrium/Schwefel-Zellen 17.1, 17.2, 17.3...17.n (n = beliebige ganze Zahl) auf. Die beiden Enden der Zellen-Serienschaltung sind mit Hauptklemmen, und zwar einem positiven Hauptanschluß 18 und einem negativen Hauptanschluß 19 verbunden. Jede der Natrium/Schwefel-Zellen 17.1,...17.n wird durch ein thermisches Varistorsicherungselement 20.1....20.n überbrückt.

Im normalen Betriebsfall gibt jede der Natrium/Schwefel-Zellen 17.1...17.n eine festgelegte Spannung ab. Diese Betriebsspannung jeder Zelle hat einen geringen Stromfluß über die überbrückenden thermischen Varistorsicherungselemente 20.1...20.n zur Folge. Steigt der Innenwiderstand einer ausfallenden Natrium/Schwefel-Zelle an, so ergibt sich eine Überspannung an den Anschlußklemmen dieser Zelle, was, wie beschrieben, eine irreversible Auslösung des betreffenden Varistorsicherungselements und anschließend eine niederohmiße Überbrückung der hochohmigen Zelle zur Folge hat.

Entsprechend der Ansprechtemperatur und der Ansprechzeit kann die thermische Sicherung aus einem leitfähigen Material, z.B. einer Metallegierung wie im Ausführungsbeispiel nach Fig. 1 oder einem isolierenden Material, z.B. einem Glasfaserverbund wie im Ausführungsbeispiel gemäß Fig. 2, bestehen. Durch Auswahl geeigneter leitfähiger bzw. isolierender Materialien ergeben sich zahlreiche Variationsmöglichkeiten bezüglich der Rewünschten Ansprechtemperatur bzw. -zeit.

Die beschriebenen Varistorsicherungselemente eignen sich nicht nur zum spannungsabhängigen, sondern auch zum temperaturabhängigen Schutz von elektrischen Schaltkreisen, d.h. bei Überschreiten der kritischen Temperatur (z.B. Schmelzpunkt der Schmelzlegierung 4 oder Entspannungstemperatur des Isolators 15) löst das Varistorsicherungselement auch aus, ohne daß eine Überspannung am elektrischen Schaltkreis ansteht.

## Patentansprüche

1. Sicherungselement mit zwei Zuleitungen (9, 11) zum parallelen Anschluß an eine Batteriezelle (17,1...17,n), mit einem zwischen den beiden Zuleitungen (9, 11) liegenden Halbleiter und einer durch die Joulsche Verlustwärme des Halbleiters auslösbaren thermischen Sicherung, wobei durch das Auslösen der thermischen Sicherung zwei den Halbleiter überbrückende, mit den Zuleitungen (9, 11) verbundene Schaltkontakte (10, 12) irreversibel schließbar sind, dadurch gekennzeichnet, daß ein Varistor (8) als Halbleiter eingesetzt ist und daß der Varistor (8) mit beiden Zuleitungen (9, 11) direkt verbunden ist, wobei ein Isolator (15) zwischen ein verlängertes Ende (13) der ersten U-förmigen Zuleitung (9) und einer wannenförmigen Ausnehmung (14) der zweiten Zuleitung (11) eingeschoben ist und beide Zuleitungen (9, 11) mit einander gegenüberliegenden Schaltkontakten (10, 12) ausgerüstet sind.

2. Sicherungselement nach Anspruch 1, gekennzeichnet durch den Einsatz eines elastischen Verbundes aus Glasfasern als Isolator (15).

3. Sicherungselement mit zwei Zuleitungen (2, 5) zum parallelen Anschluß an eine Batteriezelle, mit einem zwischen den beiden Zuleitungen (2, 5) legenden Halbleiter, wobei eine (5) der Zuleitungen federnd ausgebildet und über eine als thermische Sicherung dienende elektrisch leitfähige Schmelzlegierung (4) mit dem Halbleiter verbunden ist und wobei durch das Auslösen der thermischen Sicherung zwei den Halbleiter überbrückende, mit den Zuleitungen (2, 5) verbundene Schaltkontakte (3, 6) irreversibel schließbar sind, dadurch gekennzeichnet, daß ein Varistor (1) als Halbleiter eingesetzt ist und daß der Varistor (1) direkt mit einer U-förmigen Zuleitung (2) verbunden ist, wobei beide Zuleitungen (2, 5) mit einander gegenüberliegenden Schaltkontakten (3, 6) ausgerüstet sind.

## Claims

1. Fuse element with two leads (9, 11) for parallel conection to a battery cell (17.1... 17.n), with a semiconductor located between the two leads (9,11) and with a thermal fuse which can be blown as result of the resistance loss of the semiconductor, at the same time two switch contacts (10, 12), bridging the semiconductor and connected to the leads (9, 11), being closable irreversibly as a result of the blowing of the thermal fuse, characterised in that a varistor (8) is used as a semiconductor, and in that the varistor (8) is connected directly to the two leads (9, 11), an insulator (15) being inserted between an extended end (13) of the first U-shaped lead (9) and a trough-shaped recess (14) of the second lead (11), and the two leads (9, 11) being equipped with switch contacts (10, 12) located opposite one another.

2. Fuse element according to Claim 1, characterised by the use of an elastic composite structure consisting of glass fibres as an insulator (15).

3. Fuse element with two leads (2, 5) for parallel connection for parallel connection to a battery cell, and with a semiconductor located between the two leads (2, 5), one (5, 6) of the leads being made resilient and connected to the semiconductor via an electrically conductive fusible alloy (4) serving as a thermal fuse, and two switch contacts (3, 6), bridging the semiconductor and connected to the leads (2, 5), being closable irreversibly as a result of the blowing of the thermofuse, characterised in that a varistor (1) is used as a semiconductor, and in that the varistor (1) is connected directly to a U-shaped lead (2), the two leads (2, 5) being equipped with switch contacts (3, 6) located opposite one another.

## Revendications

1. Elément de coupe-circuit comprenant deux lignes d'amenée (9, 11) pour le branchement parallèle à un élément de batterie (17.1...17.n), un semiconducteur placé entre les deux lignes d'amenée (9, 11) et un coupe-circuit thermique déclenchable par dissipation de chaleur par effet Joule du semiconducteur, deux contacts de commutation de commande (10, 12), pontant le semiconducteur et reliés aux lignes d'amenée (9, 11), pouvant être fermés de façon irréversible par le déclenchement du coupe-circuit thermique, caractérisé par le fait que comme semiconducteur, on utilise un varistor (8) et que le varistor (8) est directement raccordé aux deux lignes d'amenée (9, 11), un isolateur (15) étant inséré entre une extrémité prolongée (13) de la première ligne d'amenée (9) en forme d'U et un évidement (14) en forme de cuvette de la seconde ligne d'amenée (11) et les deux lignes d'amenée (9, 11) étant équipées de contacts de commutation de commande (10, 12) situés en regard l'un de l'autre.

2. Elément de coupe-circuit selon la revendication 1, caractérisé par l'emploi d'un compound élastique en fibres de verre comme isolateur (15).

3. Elément de coupe-circuit comprenant deux lignes d'amenée (2, 5) pour le branchement parallèle à un élément de batterie et un semiconducteur placé entre les deux lignes d'amenée (2, 5), l'une (5) des lignes d'amenée étant réalisée élastique et étant raccordée au semiconducteur par l'intermédiaire d'un alliage fusible (4) électriquement conducteur servant de coupe-circuit thermique et deux contacts de commutation de commande (3, 6), pontant le semiconducteur et reliés aux lignes d'amenée (2, 5), pouvant être fermés de façon irréversible par le déclenchement du coupe-circuit thermique, caractérisé par le fait que,comme semiconducteur, on utilise un varistor (1) et que le varistor (1) est directement raccordé à une ligne d'amenée (2) en forme d'U, les deux lignes d'amenée (2, 5) étant équipées de contacts de commutation de commande (3, 6) situés en regard l'un de l'autre.

## Fig.1

## Fig.2

## Fig.3